# EUROPEAN PATENT APPLICATION

(11) **EP 4 342 643 A1**
(43) Date of publication of application: **27.03.2024**
(21) Application number: 22197863.8
(22) Date of filing: 26.09.2022
(51) Int. Cl.: B25J 15/02, B25J 15/12, B25J 15/04

(54) **GRIPPING APPLIANCE, AND SYSTEMS AND METHOD UTILIZING SAID GRIPPING APPLIANCE**

(71) Applicant: Mettler-Toledo GmbH, 8606 Greifensee (CH)
(72) Inventor: Schneider, Samuel, 8702 Zollikon (CH); Weber, Rene, 8133 Esslingen (CH); Clopath, Reto, 8489 Schalchen (CH); Meyer, Thomas, 8057 Zürich (CH)
(74) Representative: Mettler-Toledo

(57) **Abstract**

Disclosed is a gripping appliance (1) comprising a base member (11), a plunger actuator (31) and a plunger (30). The gripping appliance further comprises a head assembly (20) releasably attached to the base member (11) and extending distal from the base member (11). The plunger actuator (31) is arranged and configured to move the plunger (30) along a proximal-distal axis (2) of the gripping appliance. The head assembly (20) comprises a carrier (21) and a number of at least two gripping legs (24) The carrier has a through opening configured and arranged to receive the plunger (30) therethrough. The gripping legs (24) each comprise a fixation portion (201), a tip portion (204) distal of the fixation portion, an actuation portion (203) adjacent to and proximal of the tip portion, and a flex portion (202) defined between the actuation portion (203) and the fixation portion (201), wherein the actuation portions (203) of the gripping legs are configured to be in contact with the plunger (30) at least when the plunger is in an extended, distal position. The fixation portions (201) of the gripping legs are rigidly mounted to the carrier (21) of the head assembly (20). The actuation portions (203) and the tip portions (204) of the gripping legs are arranged distal from the carrier (21) of the head assembly and the gripping legs are arranged such that, when no force is transferred from the plunger to the gripping legs, the tip portions (204) of the gripping legs converge in a proximal-distal direction of the gripping appliance.

## Description

### TECHNICAL FIELD

The present disclosure relates generally to a gripping appliance, and systems and methods utilizing said gripping appliance, and in more specific aspects to the subject matter set forth in the claims.

### BACKGROUND OF THE DISCLOSURE

Numerous fields of technology require the conveyance of samples to and from measurement appliances. A non-limiting example is in thermal analysis systems for material characterization, wherein crucibles containing a sample need to be placed, for non-limiting instances, in a furnace of a differential scanning calorimeter or a thermogravimetric analysis instrument, and be removed from the furnace once the measurement is completed. The placing tolerance shall be low, for instance less than 0.2 mm from an aim point, so as to achieve highest accuracy of the measurement and/or analysis performed. JP 2010-203843 discloses a device suitable to replace and measure automatically and successively a plurality of samples in a simultaneous measuring device for an X-ray and thermal analysis using a partition, a furnace body cover or the like. To this extent, JP 2010-203843 suggests a conveyance device having gripping members which are pivotably suspended by axes. A centrally arranged plunger serves to actuate the grippers, whereas the lower ends of the grippers are urged to pivot towards each other by a spring. However, given the high cycle number such a gripping appliance will usually be subjected to, wear for instance of the axes and the corresponding running surfaces of the grippers might become an issue. Also, ease of replacement of components is relevant in order to reduce downtime and cost upon maintenance.

### LINEOUT OF THE SUBJECT MATTER OF THE PRESENT DISCLOSURE

It is an object of the present disclosure to provide a gripping appliance of the type initially mentioned. In one aspect, the herein suggested gripping appliance shall overcome certain issues of the art. The gripping appliance shall in aspects be suitable for the conveyance of samples to and from, for non-limiting instances, a furnace of a differential scanning calorimeter or a thermogravimetric analysis instrument. In further aspects, the herein disclosed gripping appliance shall be easy and fast to maintain and to repair, and contain a minimum of parts which are subject to wear or are otherwise prone to fail. In still a further aspect, it is desirable that any components which are subject to wear or are otherwise prone to fail are easy to replace. Further, it might prove advantageous if in particular those components which are subject to wear or are otherwise prone to fail are low cost components. In further aspects, the gripping appliance shall enable a high placement accuracy of a sample and/or shall have a low space requirement in a plane where the sample is located.

This is achieved by the subject matter described in claim 1.

Further effects and advantages of the disclosed subject matter, whether explicitly mentioned or not, will become apparent in view of the disclosure provided below.

Accordingly, disclosed is a gripping appliance comprising a base member and a head assembly releasably attached to the base member and extending distal from the base member. The gripping appliance further comprises a plunger actuator and a plunger. The plunger actuator is arranged and configured to move the plunger along a proximal-distal axis of the gripping appliance. The plunger actuator and the plunger may in embodiments form part of or be attached to the base member. The term "distal" may denote a direction towards an end of the appliance where the appliance is intended to be brought into contact with and manipulate an object, while "proximal" denotes the opposite direction. The spatial orientation of the proximal-distal axis may in aspects be defined by the axis along which the plunger may move. A longitudinal axis of the plunger may in embodiments define the proximal-distal axis. The head assembly comprises a carrier and a number of at least two gripping legs, which may in particular embodiments be equidistantly arranged along the circumference of the carrier. A number of three, four, or more gripping legs may prove advantageous, as three or more gripping legs, in particular if equidistantly arranged along the circumference of the carrier of the head assembly, result in an intrinsic centering function on a gripped object, and at the same time avoid that a gripped object laterally slips out between the gripping legs. It is understood, however, that if the gripping legs are provided with appropriately contoured gripping tips, the risk of a gripped object slipping out between the gripping legs can be largely reduced, if not avoided. The carrier further has a through opening extending along the proximal-distal axis and configured and arranged to receive the plunger therethrough. In aspects, it may be said that a longitudinal extent or axis of the through opening defines the proximal-distal axis of the gripping appliance. A cross-sectional shape and dimension of said through opening may correspond to a cross-sectional shape and dimension of the plunger such that the through opening of the carrier allows the plunger to be received therein and move inside the through opening along the proximal-distal axis of the head assembly, or the gripping appliance, respectively, at least within a minimum required range of motion. The through opening may in embodiments guide the plunger during said movement. It is implicitly defined by said arrangement that, if the plunger extends distally from the carrier, the distal part of the plunger is located inside a space between the gripping legs. The gripping legs each comprise a fixation portion, a tip portion distal of the fixation portion, an actuation portion adjacent to and proximal of the tip portion, and a flex portion defined between the actuation portion and the fixation portion. The actuation portions of the gripping legs are configured to be in contact with the plunger at least when the plunger is in an extended, distal position. The fixation portions of the gripping legs are rigidly, that is, non-articulated, mounted to the carrier of the head assembly. At least the actuation portions and the tip portions of the gripping legs are arranged distal from the carrier of the head assembly and the gripping legs are arranged such that, when no force is transferred from the plunger to the gripping legs, the tip portions of the gripping legs converge in a proximal-distal direction. i.e. towards a distal end, of the gripping appliance.

The actuation portions of the gripping legs may be configured to be in contact with the plunger in that the gripping legs are shaped and arranged on the carrier such that a clearance of a passage surrounded by the actuation portions, when no force is transferred from the plunger to the gripping legs, is smaller than a cross sectional dimension of a part of the plunger which is intended to be moved at an axial, or proximal-distal, position of the actuation portions.

Preferably, the range of motion of the plunger is chosen such that it can be retracted, i.e., displaced proximally, sufficiently far that it does not transfer a force onto the actuation portions of the gripping legs. In further embodiments, the range of motion and the shape of the plunger is chosen such that it can be retracted, i.e., displaced proximally, sufficiently far that a part of the plunger comes into contact with the actuation portions of the gripping legs and displaces the actuation portions of the gripping legs by a first amount.

The plunger can be extended, i.e., displaced distally, so that a part of the plunger comes into contact with the actuation portions of the gripping legs and displaces the actuation portions of the gripping legs by a second amount. The displacement of the actuation portions in the radially outward direction causes a displacement of the tip portions of the gripping legs, radially outward, whereby the distal gripping end of the gripping appliance opens. At the same time, the flex portions of the gripping legs are flexed, which yields a radially inward directed restoring force to be excerted on the actuation portions and the tip portions.

It is noted that within the framework of the present disclosure the use of the indefinite article "a" or "an" does in no way stipulate a singularity nor does it exclude the presence of a multitude of the named member or feature. It is thus to be read in the sense of "at least one" or "one or a multitude of".

As indicated above, the plunger comprises a contact portion intended for contact with the actuation portions of the gripping legs. In particular, the contact portion may comprise a tapered portion which is tapered towards a distal end of the plunger. At least a proximal or aft end of the contact portion has a cross-sectional dimension which is larger than a clearance of a passage surrounded by the actuation portions of the gripping legs when no force is transferred from the plunger to the gripping legs. The plunger may in particular have a circular cross section, in which case the cross-sectional dimension is a diameter. In further embodiments, the plunger may have a cross section of a regular polygon whereby the number of sides of the polygon equals the number of gripping legs, in which case the cross-sectional dimension is an inscribed circle diameter. It may be found advantageous if the tapered portion extends further distally to a cross sectional dimension or diameter which is smaller than the clearance of the passage surrounded by the actuation portions of the gripping legs when no force is transferred from the plunger to the gripping legs. This ensures that the contact portion of the plunger smoothly runs into contact with the actuation portions of the gripping legs. Proximal from the tapered portion the contact portion of the plunger, i.e., at least a part of the plunger proximally adjacent the tapered portion of the contact portion, may have a constant cross section, or, in more particular embodiments, be cylindrically shaped, along the proximal-distal extent of the plunger. This enables the contact portion to be smoothly introduced between the contact portions of the gripping legs with the undersized distal part of the tapered portion ahead, while gradually spreading the actuation portions and hence the tip portions of the of the gripping legs when further travelling distally. Once a proximal end of the tapered portion has been reached, the constant cross-section portion of the contact portion comes into contact with the actuation portions of the of the gripping legs, thus maintaining a constant opening of the gripping legs when the plunger is further advanced distally. For the sake of completeness, it shall be noted that the cross section of said constant cross-section portion of the contact portion is at least essentially the same as that of the proximal end of the tapered portion. The outer surface of the plunger, at least in the contact portion, is continuous, without steps which might hinder smooth sliding of the contact portion of the plunger and the actuation portions of the gripping legs relative to each other.

A distal end of the plunger may be pointed and form a distally pointing spike. Said spike may be used to pierce, for instance, a lid of a crucible by advancing the plunger distally. In providing the contact portion of the plunger with a proximal portion of constant cross-section along a proximal-distal, or axial, extent, the plunger may be advanced distally to pierce a lid without effecting a further actuation of the gripping legs.

In further non-limiting embodiments, the tip portions of the gripping legs in a very distal tip portion, adjacent and forming a distal end or tip of the gripping legs, are angled away from the center of the gripping appliance relative to the more proximal portions of the tip portions, so as to at least converge to a lesser degree in the proximal-distal direction than the more proximal portions of the gripping legs when no force is transferred from the plunger to the gripping legs. Said geometry of the very distal tip regions of the tip portions yield a smoother contact of these very distal tip portions with an object to be gripped. Ideally, the very distal tip regions extent at least essentially in the proximal-distal direction and not or only insignificantly in a radial inward or outward direction when gripping an object. It might thus be, as outlined in more detail below, that the gripping legs are specifically chosen for a particular object to be gripped.

The fact that the head assembly is releasable attached to the base member facilitates said task. Rather than replacing each gripping leg individually at the gripping appliance, the entire head assembly can be changed to a head assembly bearing gripping legs of different geometry and/or stiffness of the flex section. The gripping fingers comprise no movable parts, bearings and so forth, which avoids wear of such elements. Rather, the gripping legs are rigidly attached to the carrier of the head assembly, and the gripping movement is enabled by the flex portions of the gripping fingers, which provides superior lifetime when compared to gripping legs which comprise or are attached to the head assembly or the base member via hinges. Once the flex portions should degrade due to continuous oscillation, the entire head assembly may replaced and the gripping legs themselves may be replaced offline, which reduces downtime and facilitates maintenance.

The above-described gripping appliance can be provided with slender tip portions of the gripping legs. The drive of the gripping legs is provided comparatively far proximal and radially inward from the gripping legs. As a result, the distal tip portion of the gripping appliance can be built with a low space requirement, which in turn enables the use of the gripping appliance in connection with a multitude of quite narrowly placed samples. In other words, in connection with the herein described gripping appliance a narrow arrangement of samples is enabled, which in turn means a larger number of samples can be provided in a given space or on a given surface. Moreover, the herein described gripping appliance may be used in restricted space environments.

In another aspect, disclosed is a head assembly for a gripping appliance as described above, wherein the carrier comprises a number of flat outer mounting surfaces rotational-symmetrically arranged around an outer circumference of the carrier. In particular, the number of flat outer mounting surfaces may equal the number of gripping legs. The fixation portions of the gripping legs comprise flat mounting surfaces abutting the flat outer mounting surfaces. In non-limiting embodiments, the gripping legs are mounted to the carrier by screws extending through the fixation portions of the gripping legs.

In still a further aspect, disclosed is a gripping leg for a gripping appliance and/or a head assembly as outlined above. The flex portion is configured with a minimum bending stiffness in response to a moment induced by a force acting perpendicular to a plane of the flex portion. The resistance against bending in other directions may be chosen considerable higher. The actuation portion comprises a base which extends between and merges into the tip portion and the flex portion. The actuation portion further comprises a tongue which originates from the base. The tongue projects from the base. Preferably, a tongue angle is between 5° and 85°. The tongue angle is the angle between the plane of the flex portion and a connecting line between a point on the origin of the tongue and a point on the tip of the tongue. The tip of the tongue are the points with the greatest distance from the base.

The gripping leg may be mounted on the carrier of the head assembly such that the tongue extends radially inward. The tongue, or a tip of the tongue, respectively, in this case constitutes a counterpart abutment for the plunger.

In a preferred embodiment, the tongue angle is greater than the cone angle of the tapered portion of the plunger. Thereby, it is ensured that the tip of the tongue establishes the contact with the plunger, which results in a smooth and controlled motion of the tip portions.

In a preferred embodiment, the distance between the tip of the tongue and the base is greater than half of the difference between the cross sectional dimension of the plunger at the proximal and the distal end of its tapered portion. Thereby, it is prevented that the base or the flex portion of the gripping legs contact the plunger. Consequently, the control of the motion of the tip portions is improved.

In non-limiting embodiments, the flex portion is trapezoidally shaped and widening from the actuation portion towards the fixation portion. More particularly, the flex portion may be shaped as a frame comprising two flex legs extending along the sides of the flex portion between the actuation portion and the fixation portion. The trapezoidal shape of the flex portion may yield effects on the kinematics of the tip portion, such as to yield a straight leg travel.

The tongue of the actuation portion may be slanted towards the tip portion, thus avoiding mutual locking of the tongue and the plunger when the plunger travels into the distal direction and is in contact with the tongue. The tongue may have the shape of a trapezoid with a straight baseline whereby the side opposite of the straight baseline is formed as rounded concave arch, thus having an tip line for contact with a plunger of circular cross-section. In further embodiments, the tongue may have the shape of a rounded convex arch, extending between the end points of the straight baseline.

A window may be formed in the base of the actuation portion, having a size and shape at least essentially conformant with or greater than the size and shape of the tongue. Said window has a straight baseline, wherein the straight baseline of the tongue joins the straight baseline of the window and the tongue extends from the straight baseline of the window. The straight baseline of the window in more particular embodiments forms the proximal boundary of the window. The actuation portion may be manufactured by cutting the shape of the tongue, with the exception of the straight baseline, into the base of the actuation portion, for instance by laser cutting, and subsequently bending the tongue away from the base of the actuation portion into the desired direction and about a desired amount, thereby forming the window in the base. The transition between the base and the tongue is provided in the straight baseline.

The gripping leg may be a seamless one-piece member. However, it may be assembled from individual segments. For instance, the tongue may be joined to the base, and may for more particular, non-limiting instances be glued, welded, soldered, screwed or riveted. The gripping leg can be made of sheet metal. In some embodiments, the tongue may be realized by a wedged part of a material. The material of the tongue and the base may differ, for example to choose a material with desirable gliding properties for tongue while choosing a material with desirable flexing properties for the flex portion of the gripping leg.

Further disclosed is a conveyance system configured and adapted to convey objects, for instance crucibles, between at least two locations. The conveyance system comprises a gripping appliance as set forth above and at least one drive configured to move the gripping appliance along the proximal-distal axis of the gripping appliance and perpendicular to the proximal-distal axis of the gripping appliance.

As outlined above, in the herein described gripping appliance yields, in particular at its distal tip where samples are manipulated, very low space requirements. To this extent, disclosed is a sample manipulation system which comprises at least one of a gripping appliance and/or head assembly as set forth above, and further a tray. The tray has a top side comprising a multitude of receiving indentations which are intended, configured and adapted for receiving a sample. The receiving indentations may be configured for use with samples or crucibles of a specific shape and size. It may be provided that the receiving indentations are at least essentially circular in cross section, and the distance between the outer rim of a receiving indentation and the outer rim of a closest neighboring receiving indentation is 20% of the diameter of a receiving indentation or less. The samples and/or crucibles may thus be densely packed on the tray. In further, more specific embodiments elongated indentations may in addition be provided which extend radially from and merge into the receiving indentations. The number of elongated indentations extending radially from and merging into each of the receiving indentations is at least equal to the number of gripping legs of the gripping appliance and/or the head assembly, and at least some of the elongated indentations merging into each of the receiving indentations are circumferentially distributed in a circumferential pattern conformant to a circumferential pattern formed by the gripping legs around the gripping appliance and/or the head assembly.

In still further aspects, disclosed is a method of conveying an object between at least two locations. The method comprises:
- providing a gripping appliance of any type outlined above;
- positioning the gripping appliance with the proximal-distal axis of the gripping appliance intersecting the object and the distal tips provided at the distal or forward ends of the tip portions of the gripping legs being arranged proximate to the object;
- moving the plunger into a distal direction of the gripping appliance, whereby the plunger contacts the actuation portions of the gripping legs and forces the tip portions of the gripping legs radially apart, thereby effecting an elastic deformation of the flex portions of the gripping legs;
- moving the gripping appliance distally so as to position the distal tips of the gripping legs circumferentially enclosing the object;
- retracting the plunger in a proximal direction, whereby elastic restoration forces of the flex portions of the gripping legs cause a gripping movement of the tip portions, thereby affixing the object to the gripping appliance; and
- moving the gripping appliance with the object affixed thereto to a place of destination.

Subsequently, the object may be placed at the place of destination and the plunger may be advanced into the distal direction, whereby the plunger contacts the actuation portions of the gripping legs and forces the tip portions of the gripping legs radially apart, thereby releasing the object. After the object has been released, the gripping appliance may be moved in the proximal direction so as to get clear of the object.

As suggested above, the gripping legs may be chosen so as to fit a specific object. In this respect, the method may further comprise selecting a head assembly out of a multitude of head assemblies, wherein the head assembly is selected such that the flex portions of the gripping legs induce a defined radially inward acting force at the tip portions when the plunger is retracted and the tip portions abut the object. In aspects, the head assembly may be chosen such that a frictional force induced by the radially inward acting force and effective between the tip portions of the gripping legs and the object is greater than the weight force of the object.

As further suggested above, the plunger may comprise a pointed distal tip. The object may be a crucible comprising a sample and the method may comprise moving the plunger distally to pierce and perforate a lid closing the crucible with the pointed distal tip of the plunger.

It is understood that the features and embodiments disclosed above may be combined with each other. It will further be appreciated that further embodiments are conceivable within the scope of the present disclosure and the claimed subject matter which are obvious and apparent to the skilled person by virtue of the present disclosure.

### BRIEF DESCRIPTION OF THE DRAWINGS

The subject matter of the present disclosure is now to be explained in more detail by means of selected exemplary embodiments shown in the accompanying drawings. The figures show
- Fig. 1: an exemplary embodiment of a gripping appliance with distally closed gripping legs;
- Fig. 2: the gripping appliance of figure 1 with distally closed gripping legs in a sectional view;
- Fig. 3: the gripping appliance of figure 1 with distally opened gripping legs;
- Fig. 4: the gripping appliance of figure 1 with distally opened gripping legs in a sectional view;
- Fig. 5: the gripping appliance of figure 1 in an exploded view;
- Fig. 6: the process of gripping an object with a gripping appliance of the type herein described;
- Fig. 7: the distal part of the gripping appliance of the herein described type with in a furnace, wherein further a crucible is placed inside a furnace;
- Fig. 8: a sample manipulation system comprising a gripping appliance of the herein described type and a tray;
- Fig. 9: a first embodiment of a gripping leg for a gripping appliance of the herein described type in a plane view;
- Fig. 10: the gripping leg of figure 9 in a side view;
- Fig. 11: a first embodiment of a gripping leg for a gripping appliance of the herein described type in a plane view; and
- Fig. 12: the gripping leg of figure 11 in a side view.

It is understood that the drawings are highly schematic, and details not required for instruction purposes may have been omitted for the ease of understanding and depiction. It is further understood that the drawings show only selected, illustrative embodiments, and embodiments not shown may still be well within the scope of the herein disclosed and/or claimed subject matter.

### EXEMPLARY MODES OF CARRYING OUT THE TEACHING OF THE PRESENT DISCLOSURE

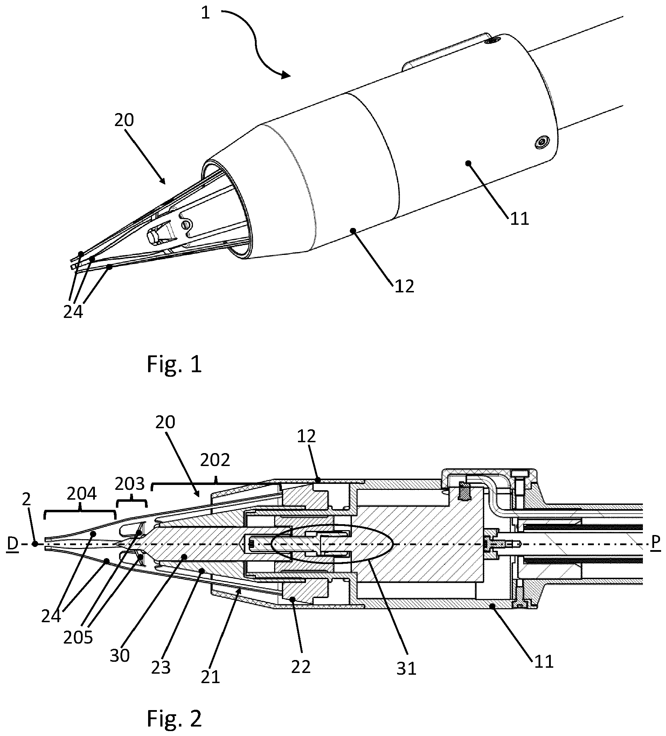

Figure 1 shows an exemplary gripping appliance 1 of the herein disclosed kind with the gripping legs closed. Gripping appliance 1 comprises base member 11 and head assembly 20 with gripping legs 24 extending in a distal direction from a carrier of the head assembly. In the depiction of figure 1 the carrier of the head assembly is largely covered by outer sleeve 12. As is readily appreciated, gripping appliance 1 has a proximal-distal axial orientation. A distal or forward end of the gripping appliance is defined by the free end tips of gripping legs 24. The proximal end of the gripping appliance is defined by the axially opposite end of base member 11. It is appreciated that the term "distal" denotes the working side of an instrument, while the term "proximal" denotes the side on which the instrument is attached to a support or comprises a handle.

Figure 2 shows a longitudinal view of gripping appliance 1 of figure 1 along the proximal-distal axis of the instrument. Base member 11 is supported and for instance connected to a drive for moving the gripping appliance on the proximal side, while head assembly 20 is releasably attached to the base member 11 and extends distal from the base member 11. Head assembly 20 comprises a carrier 21 and a number of, in the exemplary embodiment shown, four gripping legs 24. Carrier 21 comprises mount 22 and guide sleeve 23. Carrier 21 generally tapers in the distal direction. Base member 11 comprises a plunger actuator 31 and a plunger 30 extending through a central through opening in the carrier 21 of the head assembly 20. Plunger actuator 31 is arranged and configured to move or displace plunger 30 along the proximal-distal axis 2 of the gripping assembly. Proximal-distal axis 2 extends between a proximal side P and a distal side D of the gripping assembly. Plunger actuator 31 may in one instance be a stepper motor which allows controllable travel and placement of plunger 30 along proximal-distal axis 2. Plunger 30 is guided inside the through opening inside guide sleeve 23. In aspects, it may be said that a longitudinal axis of the through opening inside guide sleeve 23 defines proximal-distal axis 2. Proximal fixation portions of gripping legs 24 are rigidly, i.e., non-articulated, attached to mount 22 of carrier 21 of head assembly 20. The fixation portions of the gripping legs are not visible in the present depiction. Each one of gripping legs 24 comprises a distally arranged tip portion 204, an actuation portion 203 adjacent to and proximal of tip portion 204, and a flex portion 202 adjacent to and proximal of actuation portion 203 and defined between and connecting actuation portion 203 and the fixation portion. Each actuation portion 203 comprises a tongue 205 and a base. Each of the tongues 205 projects and extends radially inward from the base of its actuation portion 203. The tongues 205 are slanted in a distal direction, towards tip portions 204. As will become fully appreciated by virtue of the description below, tongues 205 are configured to be in contact with plunger 30 at least when plunger 30 is in an extended, distal position. As will further be appreciated by virtue of the description below, plunger 30 is configured and adapted to exert a radially outward directed force onto actuation portions 203 of gripping legs 24 and displace the actuation portions, and hence also the tip portions, radially outward, depending on the position of plunger 30 along proximal-distal axis 2. In the situation depicted in figures 1 and 2, however, plunger 30 is in a retracted, proximal position, and no or little force is transmitted from the plunger to the gripping legs. The gripping legs are arranged such that, when the plunger 30 is in the retracted position, the tip portions 204 of the gripping legs converge in a proximal-distal direction of the gripping appliance, towards their distal tips, or the distal side D of the gripping appliance, respectively.

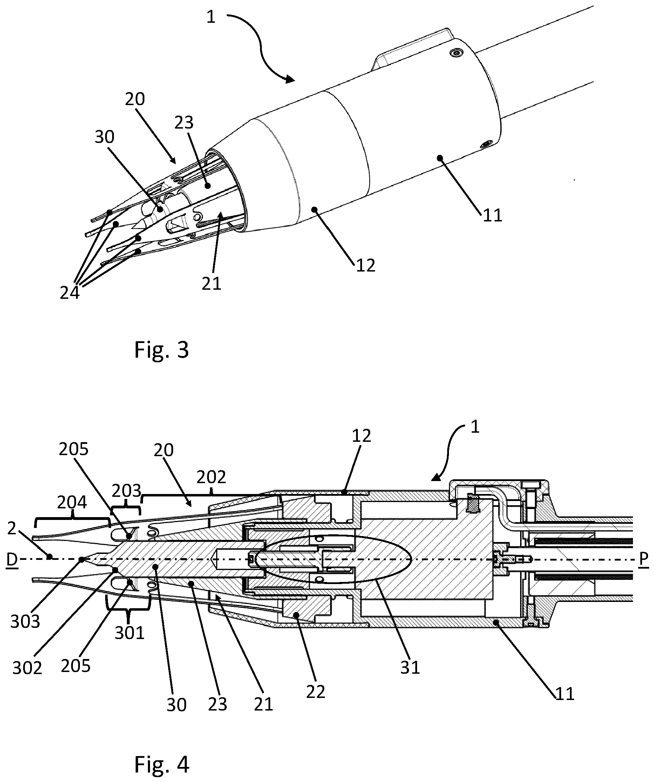

Figures 3 and 4 show gripping appliance 1 of figures 1 and 2 with gripping legs 24 opened. A comparison between figures 1 and 3, or figures 2 and 4, respectively, reveals that plunger 30 is in a more distal, extended position. Plunger 30 comprises a contact portion 301 on its lateral surface. Contact portion 301 comprises a relatively distally provided tapered portion 302 and a constant cross-section, or, in the specific non-nonlimiting example, cylindrical portion adjacent to and proximal from said tapered portion. When plunger 30 is displaced in the distal direction, from the proximal, retracted position as shown in figures 1 and 2, to a distal, extended position, as shown in figures 3 and 4, tapered portion 302 of contact portion 301 of plunger 30 is gradually pushed into the clearance between the actuation portions 203 of the gripping legs, or, more specifically, the radial inner tips of tongues 205, starting at a relatively small cross-sectional extent of tapered portion 302 and progressing to a relatively larger cross-sectional extent of tapered portion 302. As a result, the actuation portion 203 and tip portions 204 of gripping legs 24 are successively spread apart and the gripping appliance is opened. As the proximal fixation portions of the gripping legs are rigidly, that is, non-articulated, attached to mount 22, the flex portions 202 of the gripping legs flex, thus yielding a radially inward directed restoring force on the more distally arranged actuation portions 203 and tip portions 204. Said restoring force is exerted on plunger 30, which in turn exerts a radially outward directed force onto actuation portions 203 of gripping legs 24. It will be appreciated that said force increases while the plunger is advanced in the distal direction and the actuation portions 203, or tongues 205, respectively, bear on tapered portion 302 of plunger 30. Once the plunger is sufficiently advanced in the distal direction such that the actuation portions 203 or tongues 205, respectively, bear on the constant cross-section portion of contact portion 301, the radial outward displacement of and consequently the spreading force exerted on the actuation portions of gripping legs 24, remains constant, irrespective of the proximal-distal position of plunger 30. A distal end of plunger 30 is pointed and forms a spike 303. Once the actuation portions 203, or tongues 205, respectively, of the gripping legs bear on the constant cross-section portion of actuation portion 301 of plunger 30, plunger 30 can be advanced in the distal direction without any effect on the gripping legs, until spike 303 gets into contact with an object, like, for instance, a lid of a crucible, and pierce the lid, thus exposing a sample comprised inside the crucible to the environment. The skilled person will further appreciate that upon a retracting movement of plunger 30 in a proximal direction, as soon as the actuation portions 203, or tongues 205, respectively, bear on the tapered portion 302 of contact portion 301, the actuation portions and tip portions 204 of the gripping legs will, due to the restoring force exerted by flexed flex portions 202, successively travel radially inward, i.e. close the gripping appliance. If, however, an object is placed between tip portions 204 prior to retracting plunger 30 from the position shown in figures 3 and 4, tip portions 204 will bear on said object and a remaining restoring force, which is dependent upon the cross-sectional dimension of the object, is exerted on the object. That means, said object is held between, or gripped by, tip portions 204. Said grip can be released in again advancing plunger 30 in the distal direction. The comparatively steep angle of tapered portion 302 of contact portion 301 of plunger 30 translates a defined axial travel of the plunger into a comparatively large radial travel of the tip portions. However, said kinematics may be influenced in accordingly selecting the cone angle of tapered portion 302.

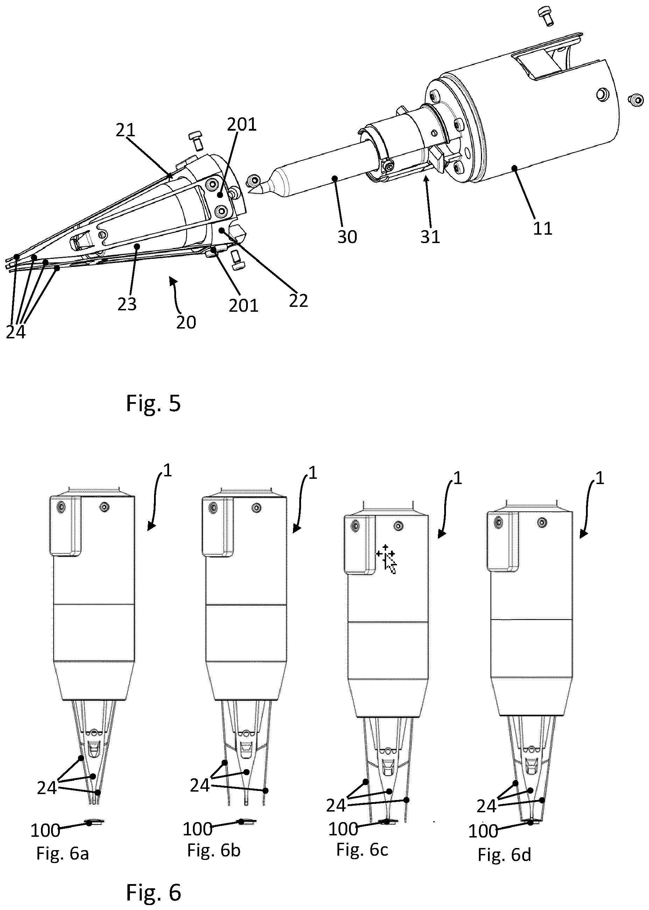

Figure 5 shows an exploded view on a gripping appliance as shown in figures 1 through 4. As can be seen in this view, mount 22 of carrier 21 of head 20 comprises a number of outer mounting surfaces rotationally symmetrical and circumferentially equidistant arranged around the outer circumference of mount 22. Proximal fixation portions 201 of the gripping legs are fixedly attached to the mount at the mounting surfaces, for instance by screws. It is well noted that fixation portions 201 of gripping legs 24 are inhibited from any movement on the mount 22, or carrier 21, respectively. Any relative movement between the tip portions of gripping legs 24 and carrier 21 can thus only be achieved by flexing of the flex portions of the gripping legs. Plunger actuator 31 is attached to base member 11. Plunger 30 extends distally from plunger actuator 31 and is intended to be received through the through opening in carrier 21, or guide sleeve 23, respectively, as outlined in connection with figures 2 and 4.

The gripping appliance outlined in connection with figures 1 through 4 may be connected to at least one drive which is configured to move the gripping appliance along the proximal-distal axis of the gripping appliance as well as in a plane perpendicular to the proximal-distal axis of the gripping appliance, so as to form a conveyance system which is configured and adapted to convey crucibles or other objects between at least two locations.

An exemplary process of gripping an object is outlined in connection with figure 6. An object 100, for instance a crucible, is placed on a surface. As shown in figure 6a, the gripping appliance 1 is initially positioned over the object, with the proximal-distal axis of the gripping appliance intersecting the object and the distal tip of the gripping legs 24 being arranged proximate to the object, i.e., pointing downward in the specifically shown example. The plunger is advanced in the distal direction of the gripping appliance, i.e., towards object 100, thus forcing the distal tips of gripping legs 24 apart and opening the gripping appliance, as depicted in figure 6b. Subsequently, gripping appliance 1 is moved in the distal direction, which is downward in the shown exemplary embodiment, so as to position the distal tips of the gripping legs circumferentially enclosing the object, as depicted in figure 6c. The plunger may then be retracted in the proximal direction, whereby the tip portions of the gripping legs 24 travel radially inward due to the elastic restoring forces of the flexed flex portions of the gripping legs. The tip portions thus abut object 100 and exert a radially inward directed force on object 100. The skilled person will readily appreciate that said force exerted on the object depends on the cross-sectional dimension of the object on the one hand, and the geometry of the gripping legs and the spring stiffness of the flex portions of the gripping legs on the other hand. Thus, the head may be chosen dependent on the cross-sectional dimension and weight of object 100 as a head equipped with gripping legs which are selected to yield a radially inward directed gripping force on the object within a range sufficient to induce a frictional force greater than the weight of the object on the one hand, but on the other hand to avoid damage to the object by excess force. Once the object is affixed to the gripping appliance by the radially inward acting restoring forces of the flex portions, the object may be lifted from the surface in moving the gripping appliance proximally, or upward in the specific example. The gripping appliance may travel to a place of destination. The subsequent process of placing the object at a place of destination is apparent to a person having skill in the art by virtue of the above presented process and explanations as to the function of the gripping appliance. It is noted that if the number of gripping legs is three or more, and in particular the gripping legs are furthermore circumferentially equidistant distributed, the radially inward directed forces exerted on an object are self-centered, and there is no danger of the object laterally slipping out between the gripping legs.

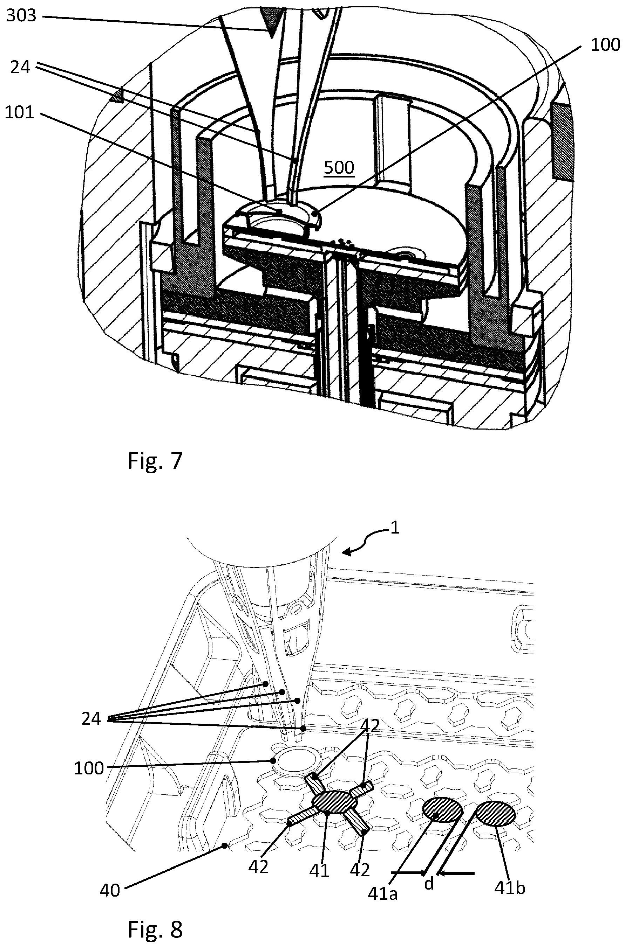

In the example shown in figure 7 a crucible 100 has been placed inside the furnace 500. The crucible 100 is closed on the top side by a lid 101 and may contain a sample. The plunger with the distal spike 303 may be advanced distally to pierce and penetrate lid 101 with spike 303, thereby exposing the sample contained in crucible 100 to the environment inside the furnace 500.

Figure 8 outlines a sample manipulation system which comprises a gripping appliance 1 and a tray 40. The tray has a top side which comprises a multitude of receiving indentations 41, 41a, 41b intended and adapted for receiving a crucible 100. The slender design of the distal end of gripping appliance 1, comprising tip portions of gripping legs 24, enable two neighboring crucibles to be placed very close to each other. The receiving indentations may have a circular cross section, and the distance d between two immediately neighboring receiving indentations, like for instance 41a and 41b, may be 20 % or less of the diameter of the receiving indentations. This allows a dense arrangement of crucibles on the tray. Elongated indentations 42 are, in addition to the receiving indentations, provided in the top side of tray 40. The elongated indentations 42 extend radially from and merge into the receiving indentations 41. Four elongated indentations 42 are shown to merge into each receiving indentation 41. This number equals the number of gripping legs 24 provided on the gripping appliance. The elongated indentations 42 have the same circumferential distribution around the receiving indentations 41 as the gripping legs around the proximal-distal axis of the gripping appliance. The width of elongated indentations 42 is at least the width of the distal portion of a tip portion of a gripping leg. This allows the tip portions of the gripping legs to be received, at least with their distal tip regions, inside the elongated indentations 42 merging into a receiving indentation 41 and move inside said elongated indentations, radially with respect to the receiving indentation. This allows the gripping and releasing travel of the tip portions of gripping legs 24. In the shown embodiment, the elongated indentations connect and merge into two diagonally neighboring receiving indentations. Thus, the length of an elongated indentation is approximately 1.4 times the minimal distance d between two closest neighboring receiving indentations 41a and 41b, which allows for sufficient travel distance of the tip portions of gripping legs 24 on a tray on which crucibles are densely packed. Further, the elongated indentations 42 are deeper than receiving indentations 41, which also supports unrestricted travel of the tip portions of gripping legs 24 inside the elongated indentations.

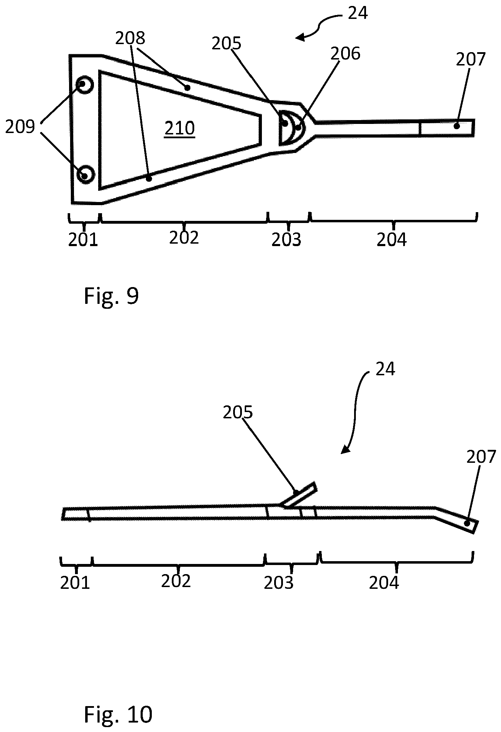

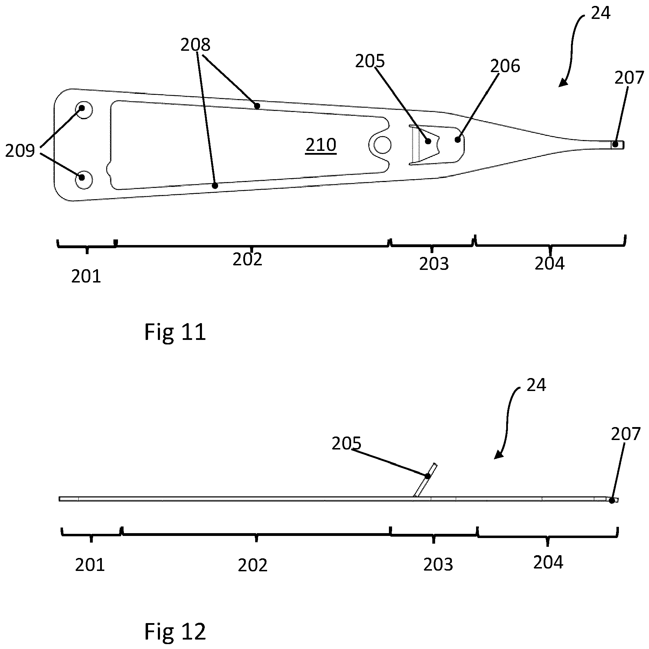

Figures 9 through 12 illustrate exemplary embodiments of gripping legs 24 as such. Figure 9 shows a plain view and figure 10 shows a side view of a first embodiment of a gripping leg. Figure 11 shows a plain view and figure 12 shows a side view of a second embodiment of a gripping leg. As becomes apparent from figure 9, gripping leg 24 comprises proximal fixation portion 201 with holes 209 therethrough for receiving screws for attaching the gripping leg to a carrier of a head, as outlined above. Gripping leg 24 further comprises flex portion 202, actuation portion 203 and tip portion 204. Flex portion 202 extends distally from fixation portion 201. Flex portion 202 is generally trapezoidally shaped and tapers in the distal direction and further merges into actuation portion 203, which is provided distally adjacent the flex portion. Flex portion 202 comprises two flex legs 208 extending from the fixation portion, with a window 210 shaped therebetween. Flex portion 202 has a minimum bending stiffness against a moment which is induced by a force acting along an axis perpendicular to a plane of the flex portion, in the current depiction perpendicular to the plane of drawing. In other directions, however, the bending stiffness is relatively higher such as to prevent the tip portion from lateral swerving movements. Flex legs 208 converge distally and merge into actuation portion 203. If a gripping leg is rigidly attached to the head of a gripping appliance, as outlined above, at the fixation portion 201, and actuation portion 203 is forced radially outward by the plunger of the gripping appliance, said movement requires bending of a portion interposed between fixation portion 201 and actuation portion 203. If said bending occurs within the elasticity limits of the interposed portion, the interposed portion flexes, yielding an elastic restoring force. Hence, flex portion 202 is actually defined between fixation portion 201 and actuation portion 203. The trapezoidal shape of the flex portion ensures straight radial travel of the tip portions upon actuation of a gripping leg mounted to a gripping appliance of the type outlined above by the plunger. Actuation portion 203 comprises tongue 205 and window 206. As becomes apparent by virtue of figures 10and 12, respectively, tongue 205 projects from the base of actuation portion 203 into a first direction relative to the general proximal-distal extent of gripping leg 24. Further, tongue 205 is slanted into the distal direction, i.e., towards tip portion 204. Thus, the sliding movement between the tongue of a gripping leg mounted to a gripping appliance and the plunger of the gripping appliance when the plunger moves distally to force the distal part of the gripping leg radially outward is facilitated.

In the embodiment according to Fig. 9, window 206 and tongue 205 are generally arched, wherein tongue 205 merges into the base of actuation portion 203 at a common straight baseline of arched tongue 205 and arched window 206. Tongue 205 comprises a rounded tip intended to get in contact with the plunger. Said rounded shape further supports a smooth sliding between the plunger and the tongue.

In the embodiment according to Fig. 11, window 206 is essentially rectangular while the tongue 205 has a trapezoidal shape wherein the side opposite of the baseline is concavely arched. The tongue 205 merges into the base of actuation portion 203 at a common straight baseline of the tongue 205 and the window 206. Tongue 205 comprises a rounded tip line intended to get in contact with a cylindrical plunger. Said rounded shape guides the gripping leg and helps to prevent lateral swerving movements.

Window 206 and tongue 205 can have a generally conformant size and shape or the window 206 can be greater than the tongue 205. This is due to the fact that tongue 205 may be manufactured in performing a suitable cut, for instance by laser cutting, into the base of actuation portion 203 and subsequently bending tongue 205 out of the plane of the sheet forming the base of actuation portion 203. In other embodiments, however, tongue 205 may be a separate member attached to the base of actuation portion 203. Any suitable attachment method may be applied, including, while not limited to, gluing, soldering, welding, screwing and riveting. It is understood that, if tongue 205 is an individual member attached the base of actuation portion 203, the base of actuation portion 203 may not comprise window 206.

Actuation portion 203 distally merges into tip portion 204, which is distally adjacent to actuation portion 203. Tip portion 204, in a very distal portion 207, is angled with respect to a more proximal portion of the tip portion. The very distal portion 207 is angled in a direction opposite to that of tongue 205. As will be appreciated, when gripping leg 24 is properly mounted to a head or a gripping appliance as outlined above, tongue 205 projects radially inward from the base of actuation portion 203. Accordingly, very distal portions 207 of the tip portions 204 of the gripping legs mounted to the head or gripping appliance are less convergent in the distal direction when compared to the more proximal portions of the tip portions 204, or might even diverge distally, dependent upon the specific geometry of a gripping leg and the position of the plunger, i.e., dependent upon whether the gripping appliance is opened or closed at its distal end. Said angulation of the very distal tip portion 207 might serve to better accommodate an object to be gripped. Gripping leg 24 may generally be manufactured from a piece of sheet metal, in particular from a sheet of spring steel.

While the subject matter of the disclosure has been explained by means of exemplary embodiments, it is understood that these are in no way intended to limit the scope of the claimed invention. It will be appreciated that the claims cover embodiments not explicitly shown or disclosed herein, and embodiments deviating from those disclosed in the exemplary modes of carrying out the teaching of the present disclosure will still be covered by the claims.

## Claims

1. Gripping appliance (1) comprising a base member (11), a plunger actuator (31) and a plunger (30), the gripping appliance further comprising a head assembly (20) releasably attached to the base member (11) and extending distal from the base member (11),
wherein the plunger actuator (31) is arranged and configured to move the plunger (30) along a proximal-distal axis (2) of the gripping appliance, wherein the head assembly (20) comprises a carrier (21) and a number of at least two gripping legs (24), the carrier (21) having a through opening extending along the proximal-distal axis (2) and configured and arranged to receive the plunger (30) therethrough,
wherein the gripping legs (24) each comprise a fixation portion (201), a tip portion (204) distal of the fixation portion, an actuation portion (203) adjacent to and proximal of the tip portion, and a flex portion (202) defined between the actuation portion (203) and the fixation portion (201), wherein the actuation portions (203) of the gripping legs are configured to be in contact with the plunger (30) at least when the plunger is in an extended, distal position,
wherein the fixation portions (201) of the gripping legs are rigidly mounted to the carrier (21) of the head assembly (20) and wherein at least the actuation portions (203) and the tip portions (204) of the gripping legs are arranged distal from the carrier (21) of the head assembly and the gripping legs are arranged such that, when no force is transferred from the plunger to the gripping legs, the tip portions (204) of the gripping legs converge in a proximal-distal direction of the gripping appliance.

2. The gripping appliance according to the preceding claim, wherein the plunger (30) comprises a contact portion (301) intended for contact with the actuation portions of the gripping legs, wherein the contact portion (301) comprises a tapered portion (302) which is tapered towards a distal end (303) of the plunger, and at least a proximal end of the contact portion has a cross sectional dimension which is larger than a clearance of a passage surrounded by the actuation portions (203) of the gripping legs when no force is transferred from the plunger to the gripping legs.

3. The gripping appliance according to any preceding claim, wherein a distal end (303) of the plunger is pointed.

4. The gripping appliance according to any preceding claim, wherein the tip portions (204) of the gripping legs in a very distal tip portion (207) are angled away from the center of the gripping appliance, so as to at least converge to a lesser degree in the proximal-distal direction than the more proximal portions of the gripping legs when no force is transferred from the plunger to the gripping legs.

5. A head assembly (20) for a gripping appliance according to any of the preceding claims, wherein the carrier (21) comprises a number of flat outer mounting surfaces rotational-symmetrically arranged around an outer circumference of the carrier, and the fixation portions (201) of the gripping legs comprise flat mounting surfaces abutting the flat outer mounting surfaces.

6. A gripping leg (24) for a gripping appliance according to any of claims 1 through 4 and/or a head assembly according to claim 5, wherein the flex portion (202) is configured with a minimum bending stiffness in response to a moment induced by a force acting perpendicular to a plane of the flex portion, and wherein the actuation portion (203) comprises a base which extends between and merges into the tip portion (204) and the flex portion (202), and further comprises a tongue (205) which originates from the base, wherein the tongue projects from the base , preferably defining a tongue angle a between the plane of the flex portion and a connecting line between a point on the origin of the tongue and a point of the tongue with the greatest distance from the base which is between 5° and 85°.

7. The gripping leg according to the preceding claim, wherein the flex portion (202) is trapezoidally shaped and widening from the actuation portion (203) towards the fixation portion (201), and wherein the flex portion (202) is in particular shaped as a frame comprising two flex legs (208) extending along the sides of the flex portion between the actuation portion and the fixation portion.

8. The gripping leg according to any of the two preceding claims, wherein the tongue (205) is slanted towards the tip portion (204).

9. Conveyance system configured and adapted to convey objects (100) between at least two locations, the conveyance system comprising a gripping appliance (1) according to any of claims 1 through 4, and at least one drive configured to move the gripping appliance along the proximal-distal axis (2) of the gripping appliance and perpendicular to the proximal-distal axis of the gripping appliance.

10. A sample manipulation system, comprising at least one of a gripping appliance (1) according to any of claims 1 through 4 and/or a head assembly (20) according to claim 5 and further comprising a tray (40), wherein the tray has a top side comprising a multitude of receiving indentations (41, 41a, 42) intended and adapted for receiving a sample, wherein the receiving indentations are at least essentially circular in cross section and the distance (d) between the outer rim of a receiving indentation (41a) and the outer rim of a closest neighboring receiving indentation (41b) is 20% of the diameter of a receiving indentation or less.

11. A method of conveying an object (100) between at least two locations, the method comprising
providing a gripping appliance (1) according to any of claims 1 through 4, positioning the gripping appliance (1) with the proximal-distal axis (2) of the gripping appliance intersecting the object (100) and the distal tips of the gripping legs (24) being arranged proximate to the object,
moving the plunger (30) into a distal direction (D) of the gripping appliance, whereby the plunger (30) contacts the actuation portions (203) of the gripping legs and forces the tip portions (204) of the gripping legs radially apart, thereby effecting an elastic deformation of the flex portions (202) of the gripping legs,
moving the gripping appliance (1) distally so as to position the distal tips of the gripping legs circumferentially enclosing the object (100),
retracting the plunger (30) in a proximal direction (P), whereby elastic restoration forces of the flex portions of the gripping legs cause a gripping movement of the tip portions (204), thereby affixing the object to the gripping appliance, and
moving the gripping appliance with the object affixed thereto to a place of destination.

12. The method according to the preceding claim, comprising placing the object (100) at the place of destination, advancing the plunger (30) into the distal direction (D), whereby the plunger (30) contacts the actuation portions (203) of the gripping legs and forces the tip portions (204) of the gripping legs radially apart, thereby releasing the object, and moving the gripping appliance in the proximal direction.

13. The method according to any of the two preceding claims, comprising selecting a head assembly (20) out of a multitude of head assemblies, wherein the head assembly is selected such that the flex portions (202) of the gripping legs (24) induce a defined radially inward acting force at the tip portions when the plunger is retracted and the tip portions abut the object.

14. The method according to the preceding claim, wherein the head assembly (20) is chosen such that a frictional force induced by the radially inward acting force and effective between the tip portions of the gripping legs and the object is greater than the weight force of the object.

15. The method according to any of the preceding method claims, wherein the plunger (30) has a pointed distal tip (303) and the object (100) is a crucible, the method comprising moving the plunger (30) distally to pierce and perforate a lid (101) closing the crucible with the pointed distal tip.
